# EUROPÄISCHE PATENTANMELDUNG

(11) **EP 1 054 185 A2**
(43) Veröffentlichungstag der Anmeldung: **22.11.2000**
(21) Anmeldenummer: 00108528.1
(22) Anmeldetag: 19.04.2000
(51) Int. Cl.: F16F 9/06

(54) **Schwingungsdämpfer**

(30) Priorität: 19.05.1999 DE 19922838
(71) Anmelder: Mannesmann Sachs AG, 53783 Eitorf (DE)
(72) Erfinder: Patzenhauer, Andre, 53783 Eitorf (DE); Weber, Johannes, 53809 Ruppichteroth (DE); Kasteel, Richard von, 53721 Siegburg (DE)

(57) **Zusammenfassung**

Schwingungsdämpfer mit einem Arbeitszylinder sowie an den Enden angeordneten Befestigungselementen, einem an einer Kolbenstange befestigten Arbeitskolben, der den Arbeitszylinder in zwei Arbeitsräume unterteilt, Dämpfungsventilen zur Erzeugung einer Dämpfungskraft in mindestens einer Bewegungsrichtung, wobei die Kolbenstange durch den gesamten Arbeitszylinder hindurch verläuft und die beiden Endbereiche durchdringt, wobei der statische Systemdruck in den Arbeitsräumen über mindestens ein Druckelement erhöhbar ist.

## Beschreibung

Die Erfindung bezieht sich auf einen Schwingungsdämpfer mit einem Arbeitszylinder sowie an den Enden angeordneten Befestigungselementen, einem an einer Kolbenstange befestigten Arbeitskolben, der den Arbeitszylinder in zwei Arbeitsräume unterteilt, Dämpfungsventilen zur Erzeugung einer Dämpfungskraft in mindestens einer Bewegungsrichtung, wobei die Kolbenstange durch den gesamten Arbeitszylinder hindurch verläuft und die beiden Endbereiche durchdringt.

Es sind bereits Schwingungsdämpfer bekannt (z.B. DE 18 03 588 A1), bei denen der Arbeitszylinder durch einen Arbeitskolben in zwei Arbeitsräume unterteilt wird und die den Arbeitskolben tragende Kolbenstange durch den Arbeitszylinder hindurch nach beiden Seiten verläuft. Der Arbeitskolben ist mit Dämpfungsventilen zur Erzeugung einer Dämpfungskraft versehen, wobei die in den Stirnseiten angeordneten Rückschlagventile ein Nachfließen von Dämpfungsmittel aus dem Ausgleichsraum gestatten. Nachteilig ist hierbei, daß die gewünschte Steifigkeit aufgrund der Kompressiblität von Dämpferöl und Atmung der mit dem Arbeitsdruck belasteten Bauteile nicht erreicht wird, so daß der effektive E-Modul des Dämpfersystems unzureichend ist. Aus diesem Grunde erzeugen Schwingungsdämpfer dieser Bauart bei kleinen Arbeitshüben zu wenig Dämpfungsarbeit.

Aufgabe der Erfindung ist es, einen Schwingungsdämpfer zu schaffen, bei dem eine ausreichende Steifigkeit erreicht wird und bei dem auch bei kleinen Arbeitshüben eine ausreichende Dämpfungsarbeit ausgeführt werden kann.

Zur Lösung dieser Aufgabe ist erfindungsgemäß vorgesehen, daß der statische Systemdruck in den Arbeitsräumen über mindestens ein Druckelement erhöhbar ist Bei dieser Ausführung ist von Vorteil, daß der Arbeitskolben hydraulisch eingespannt ist und aufgrund der durch den Arbeitszylinder hindurch geführten Kolbenstange die Arbeitskammern im Verhältnis zum Arbeitskolben gleiche Arbeitsflächen aufweisen, so daß durch den erhöhten statischen Innendruck keine unerwünschten Ausfahrkräfte auf die Kolbenstange wirken.

Nach einem weiteren wesentlichen Merkmal ist vorgesehen, daß als Druckelement ein Federspeicher vorgesehen ist.

Eine weitere Ausgestaltung sieht vor, daß das Druckelement über mindestens eine Strömungsverbindung mit den Arbeitsräumen in Verbindung steht. Hierbei ist von Vorteil, wenn die jeweilige Strömungsverbindung mit einem Rückschlagventil versehen ist.

Nach einer weiteren Ausgestaltung ist vorgesehen, daß die Dämpfungsventile im Arbeitskolben angeordnet sind oder daß die Dämpfungsventile in einer, die beiden Arbeitsräume verbindenden Leitung angeordnet sind.

Die Dämpfungsventile brauchen nicht zwingend im Arbeitskolben vorgesehen werden, so daß es nach einer weiteren Ausführungsform möglich ist, daß die Leitung außerhalb der Arbeitsräume angeordnet ist.

Nach einem weiteren wesentlichen Merkmal ist vorgesehen, daß stirnseitig des Druckelementes eine Drosselverbindung in mindestens einem Arbeitsraum vorgesehen ist. Vorteilhaft ist hierbei, daß bei Verwendung einer Drosselverbindung mit sehr kleiner Querschnittsfläche ein kleiner Volumenstrom zum Ausgleich der temperaturbedingten Volumenänderung in den Arbeitsräumen ermöglicht wird, ohne jedoch die dynamischen Arbeitsdrücke auf das Federspeicherelement wirken zu lassen.

Eine weitere Ausgestaltung sieht vor, daß als Druckelement ein druckbeaufschlagter Trennkolben vorgesehen ist, der das Dämpfungsmittel vorspannt.

In weiterer Ausgestaltung ist vorgesehen, daß die Strömungsverbindung außerhalb des Arbeitszylinders hin zu beiden Stirnseiten verläuft.

Eine günstige Ausführungsform sieht vor, daß der Durchmesser der Kolbenstange in den Arbeitsräumen unterschiedlich groß ist. Sollten Aus- oder Einfahrkräfte auf den Kolben bzw. die Kolbenstange erwünscht sein, so lassen sich durch unterschiedliche Querschnitte der Kolbenstangen in dem jeweiligen Arbeitsraum unterschiedlich große Arbeitsflächen erreichen, so daß eine Aus- oder Einfahrkraft erzielt werden kann. Die Dämpfungsfunktion des Arbeitskolbens ist dabei jedoch lageunabhängig.

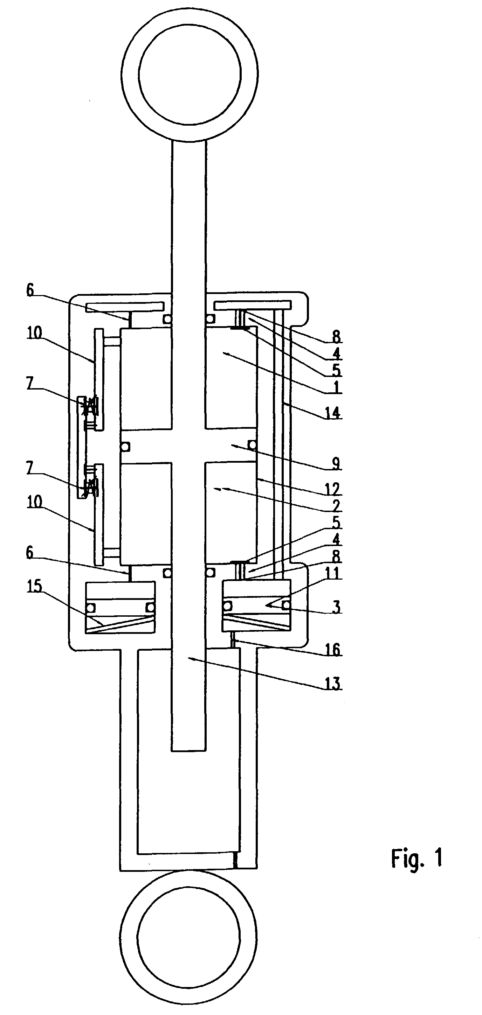

Ein bevorzugtes Ausführungsbeispiel der Erfindung ist in der Figur 1 dargestellt.

Aus der Figur 1 ist ein Schwingungsdämpfer zu entnehmen, bei dem der Arbeitskolben 9 den Arbeitszylinder 12 in zwei Arbeitsräume 1 und 2 unterteilt. Die Kolbenstange 13 verläuft durch den Arbeitszylinder 12 hindurch, so daß die druckbeaufschlagten Arbeitsflächen des Arbeitskolbens 9 in beiden Arbeitsräumen 1 und 2 gleich groß ausgebildet sind.

Die Dämpfungskraft läßt sich durch Dämpfungsventile 7 erzielen, die entweder im Arbeitskolben 9 (nicht dargestellt) oder in einer Leitung, die die beiden Arbeitsräume 1 und 2 verbindet anordnen.

Dadurch das die Kolbenstange 13 durch den Arbeitszylinder 12 hindurch verläuft ist ein Ausgleichsraum für das in den Arbeitszylinder 12 eintauchende Volumen der Kolbenstange 13 nicht notwendig.

Zur Erhöhung des statischen Systemdrucks im Schwingungsdämpfer ist ein Druckelement 3 vorgesehen, welches in dem jeweiligen stirnseitigen Boden 4 über Rückschlagventile 5 mit den Arbeitsräumen 1 und 2 in Verbindung steht. Die Strömungsverbindungen 8 werden vom Druckelement 3 beaufschlagt, wobei über die Verbindung 14 der erhöhte Systeminnendruck zu beiden Stirnseiten durch die Strömungsverbindungen 8 und deren zugehörige Rückschlagventile 5 in die Arbeitsräume 1 und 2 gelangen. Auf diese Weise wird der Arbeitskolben 9 hydraulisch eingespannt. Die Arbeitsräume 1 und 2 beaufschlagen gleiche Kolbenringflächen des Arbeitskolbens 6, so daß über das Druckelement 3 der statische Systeminnendruck erhöht wird. Die Rückschlagventile 5 verhindern, daß der dynamische Arbeitsdruck nicht auf das Druckelement 3 wirkt. Auch ein Druckunterschied, bei dem der Druck im Arbeitsraum 1 oder 2 kleiner als der vom Druckelement 3 ausgeübte Druck ist wird über die Rückschlagventile 5 ausgeglichen.

Für den Fall, daß Ein- und Ausfahrkräfte der Kolbenstange erwünscht sind, läßt sich der Durchmesser der Kolbenstange in einem der Arbeitsräume 1 oder 2 ändern, so daß über die unterschiedlichen Arbeitsflächen ein entsprechend höherer Druck erzielt werden kann. Die Funktion der Dämpfungskraft bleibt dabei unberührt.

Die Drosselverbindung 6 mit einer sehr kleinen Querschnittsfläche sorgt für einen geringfügigen Volumenstrom des Dämpfungsmittels zum Ausgleich einer temperaturbedingten Volumenänderung in den Arbeitsräumen 1 oder 2. Die Drosselverbindung 6 verhindert allerdings, daß ein dynamischer Arbeitsdruck vom Arbeitskolben 9 auf das Druckelement 3 übertragen wird.

Bei diesem hier dargestellten Ausführungsbeispiel besteht das Druckelement 3 aus einem Trennkolben 11, welcher durch eine Feder 15 beaufschlagt wird, dabei ist über einen Kanal 16 ein Druckaufbau auf der Rückseite des Trennkolbens 11 unmöglich.

### Bezugszeichenliste

- 1: - Arbeitsraum
- 2: - Arbeitsraum
- 3: - Druckelement
- 4: - stirnseitiger Boden
- 5: - Rückschlagventil
- 6: - Drosselverbindung
- 7: - Dämpfungsventil
- 8: - Strömungsverbindung
- 9: - Arbeitskolben
- 10: - Leitung
- 11: - Trennkolben
- 12: - Arbeitszylinder
- 13: - Kolbenstange
- 14: - Verbindung
- 15: - Feder
- 16: - Kanal

## Patentansprüche

1. Schwingungsdämpfer mit einem Arbeitszylinder sowie an den Enden angeordneten Befestigungselementen, einem an einer Kolbenstange befestigten Arbeitskolben, der den Arbeitszylinder in zwei Arbeitsräume unterteilt, Dämpfungsventilen zur Erzeugung einer Dämpfungskraft in mindestens einer Bewegungsrichtung, wobei die Kolbenstange durch den gesamten Arbeitszylinder hindurch verläuft und die beiden Endbereiche durchdringt,
dadurch gekennzeichnet,
daß der statische Systemdruck in den Arbeitsräumen (1, 2) über mindestens ein Druckelement (3) erhöhbar ist.

2. Schwingungsdämpfer nach Anspruch 1,
dadurch gekennzeichnet,
daß als Druckelement (3) ein Federspeicher vorgesehen ist.

3. Schwingungsdämpfer nach Anspruch 1,
dadurch gekennzeichnet,
daß das Druckelement (3) über mindestens eine Strömungsverbindung (8) mit den Arbeitsräumen (1, 2) in Verbindung steht.

4. Schwingungsdämpfer nach Anspruch 3,
dadurch gekennzeichnet,
daß die jeweilige Strömungsverbindung (8) mit einem Rückschlagventil (5) versehen ist.

5. Schwingungsdämpfer nach Anspruch 1,
dadurch gekennzeichnet,
daß die Dämpfungsventile (7) im Arbeitskolben (9) angeordnet sind.

6. Schwingungsdämpfer nach Anspruch 1,
dadurch gekennzeichnet,
daß die Dämpfungsventile (7) in einer, die beiden Arbeitsräume (1 und 2) verbindenden Leitung (10) angeordnet sind.

7. Schwingungsdämpfer nach Anspruch 6,
dadurch gekennzeichnet,
daß die Leitung (10) außerhalb der Arbeitsräume (1, 2) angeordnet ist.

8. Schwingungsdämpfer nach Anspruch 1,
dadurch gekennzeichnet,
daß stirnseitig des Druckelementes (3) eine Drosselverbindung (6) in mindestens einem Arbeitsraum (1, 2) vorgesehen ist.

9. Schwingungsdämpfer nach Anspruch 1,
dadurch gekennzeichnet,
daß als Druckelement (3) ein druckbeaufschlagter Trennkolben (11) vorgesehen ist, der das Dämpfungsmittel vorspannt.

10. Schwingungsdämpfer nach Anspruch 3,
dadurch gekennzeichnet,
die Strömungsverbindung (8) außerhalb des Arbeitszylinders (12) hin zu beiden Stirnseiten verläuft

11. Schwingungsdämpfer nach Anspruch 1,
dadurch gekennzeichnet,
daß der Durchmesser der Kolbenstange (13) in den Arbeitsräumen (1, 2) unterschiedlich groß ist.
